(19) Europäisches Patentamt
European Patent Office
Office européen des brevets

(11) **EP 3 878 758 B1**

## (12) EUROPEAN PATENT SPECIFICATION

(45) Date of publication and mention
of the grant of the patent:
**08.05.2024 Bulletin 2024/19**

(21) Application number: **19882007.8**

(22) Date of filing: **28.03.2019**

(51) International Patent Classification (IPC):
**B64G 1/24** *(2006.01)*      **B64G 1/10** *(2006.01)*
**G05D 1/08** *(2006.01)*

(52) Cooperative Patent Classification (CPC):
**B64G 1/1021; B64G 1/1028; B64G 1/242;
B64G 1/245**

(86) International application number:
**PCT/KR2019/003635**

(87) International publication number:
**WO 2020/096145 (14.05.2020 Gazette 2020/20)**

(54) **METHOD AND CORRECTION DEVICE FOR CORRECTING SATELLITE IMAGE ACQUISITION POSITIONING**

VERFAHREN UND KORREKTURVORRICHTUNG ZUR KORREKTUR DER POSITION DER AUFNAHME EINES SATELLITENBILDES

PROCÉDÉ ET DISPOSITIF DE CORRECTION POUR LA CORRECTION DE POSITIONNEMENT D'ACQUISITION D'IMAGE SATELLITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2018 KR 20180135198**

(43) Date of publication of application:
**15.09.2021 Bulletin 2021/37**

(73) Proprietor: **Korea Aerospace Research Institute
Daejeon 34133 (KR)**

(72) Inventor: **LEE, Seon Ho
Daejeon 34020 (KR)**

(74) Representative: **Lavoix
Bayerstraße 83
80335 München (DE)**

(56) References cited:
**EP-A1- 2 199 207**    **JP-A- H0 627 235**
**JP-A- H0 627 235**    **JP-A- 2001 116 584**
**JP-A- 2001 116 584**    **JP-A- 2003 327 200**
**JP-A- 2003 327 200**    **JP-A- 2009 103 656**
**JP-A- 2009 103 656**    **JP-A- 2012 144 137**
**JP-A- 2012 144 137**    **US-A1- 2018 308 226**

## Description

Technical Field

Example embodiments relate to a method and apparatus for correcting a posture for obtaining a satellite image, which corrects a posture of a satellite to capture an image of a desired target on the ground by an optical camera or a satellite payload image radar device of the satellite in orbit.

Background Art

JP 2001-116584A relates to an apparatus for a calculation of a correction of the time for an observation apparatus.

> JPH 0627235 A relates to a target position calculation apparatus for a synthetic aperture radar.
> An orbiting satellite refers to a satellite that revolves around the Earth in a certain orbit.

A ground station that controls the satellite predicts a satellite orbit using an orbit propagator to plan a task of obtaining an image.

The orbit propagator is operated both in the ground station and the satellite and is configured to analyze and predict information associated with a position in a revolution orbit of the satellite and the like.

However, the limited performance of the orbit propagator may incur an error in the prediction of an orbit with respect to the traveling direction of the satellite. The error may correspond to approximately 200 meters (m) per day.

Thus, such an error may lead to an error of a position at which an image is to be obtained and also to inaccurate capturing of an image of a desired target region, preventing the task from being smoothly performed.

For example, there may be a difference between a position of the satellite in a ground-based predicted orbit and a position of the satellite in an actual orbit. This difference may be a gap between the actual orbit and the predicted orbit. The gap between the actual orbit and the predicted orbit may occur due to the limited performance of the orbit propagator, and approximately 200m of such an orbit prediction error may occur a day.

Thus, there is a desire for a technology for correcting an image acquiring posture of a satellite.

Disclosure of Invention

Technical Goals

An aspect provides a method and apparatus for correcting a satellite image acquiring posture. The method and apparatus may correct a posture of a satellite and compensate for a difference between an actual position of the satellite at a planned ground imaging time $T_{Imaging}$ that is initially set to obtain an image and a desired satellite position $P_{Desired}$ of the satellite that is initially set for capturing an image, thereby obtaining a satellite image of a desired target region without an error.

In addition, the method and apparatus may simply calculate a posture of the satellite that needs to be corrected through a mathematical calculation that uses a difference between a position in a satellite-based predicted orbit and a position in a ground-based predicted orbit.

Technical Solutions

According to an example embodiment, there is provided a method of correcting a satellite image acquiring posture, the method including receiving, from a ground-based orbit propagator, a desired satellite position $P_{Desired}$ of a satellite for imaging and a planned ground imaging time $T_{Imaging}$, in response to an image acquisition command, estimating a predicted satellite position $P_{Predicted}$ at which the satellite is to be disposed at the planned ground imaging time $T_{Imaging}$, calculating a posture correction angle $d\theta$ for the satellite at the predicted satellite position $P_{Predicted}$ using the desired satellite position $P_{Desired}$, and performing control to obtain an image from the satellite after a posture of the satellite is corrected based on the posture correction angle $d\theta$.

According to another example embodiment, there is provided an apparatus for correcting a satellite image acquiring posture, the apparatus including a receiver configured to receive, from a ground-based orbit propagator, a desired satellite position $P_{Desired}$ of a satellite for imaging and a planned ground imaging time $T_{Imaging}$, in response to an image acquisition command, an estimator configured to estimate a predicted satellite position $P_{Predicted}$ at which the satellite is to be disposed at the planned ground imaging time $T_{Imaging}$, a calculator configured to calculate a posture correction angle $d\theta$ for the satellite at the predicted satellite position $P_{Predicted}$ using the desired satellite position $P_{Desired}$, and a controller configured to perform control to obtain an image from the satellite after a posture of the satellite is corrected based on the posture correction angle $d\theta$.

Advantageous Effects

According to example embodiments described herein, a method and apparatus for correcting a satellite image acquiring posture may compensate for a difference between an actual position of a satellite at a planned ground imaging time $T_{Imaging}$ that is initially set to obtain an image and a desired satellite position $P_{Desired}$ of the satellite that is initially set to capture an image by correcting a posture of the satellite, thereby obtaining a satellite image of a desired target region without an error.

In addition, the method and apparatus may simply calculate a posture of the satellite that needs to be corrected through a mathematical calculation that uses a difference between a position in a satellite-based predicted orbit and a position in a ground-based predicted orbit.

Brief Description of Drawings

    FIG. 1 is a diagram illustrating an example of a configuration of an apparatus for correcting a satellite image acquiring posture according to an example embodiment.
    FIG. 2 is a diagram illustrating an example of a visual representation of a calculated parameter according to an example embodiment.
    FIG. 3 is a diagram illustrating a detailed example of calculating a posture correction angle according to an example embodiment.
    FIG. 4 is a diagram illustrating an example of obtaining a satellite image according to an example embodiment.
    FIG. 5 is a flowchart illustrating an example of a method of correcting a satellite image acquiring posture according to an example embodiment.

Best Mode for Carrying Out the Invention

Hereinafter, some examples will be described in detail with reference to the accompanying drawings. However, various alterations and modifications may be made to the examples. Here, the examples are not construed as limited to the disclosure and should be understood to include all changes, equivalents, and replacements within the scope of the claims.

The terminology used herein is for the purpose of describing particular examples only and is not to be limiting of the examples. As used herein, the singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains based on an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Also, when describing the examples with reference to the accompanying drawings, like reference numerals refer to like constituent elements and a repeated description related thereto will be omitted. In the description of examples, detailed description of well-known related structures or functions will be omitted when it is deemed that such description will cause ambiguous interpretation of the present disclosure.

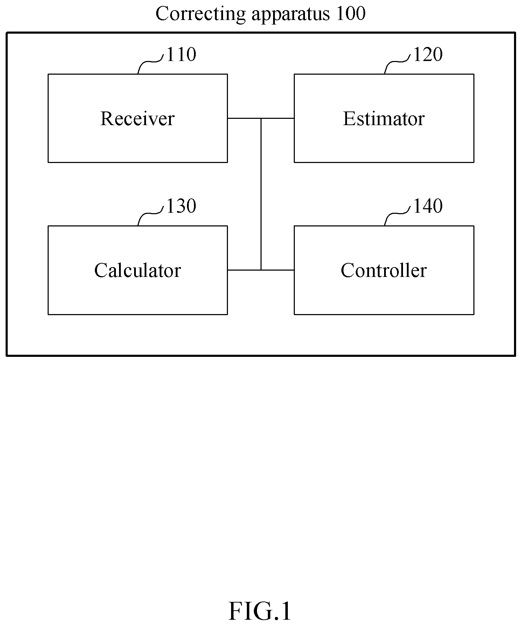

FIG. 1 is a diagram illustrating an example of a configuration of an apparatus for correcting a satellite image acquiring posture according to an example embodiment.

Referring to FIG. 1, an apparatus 100 for correcting a satellite image acquiring posture (hereinafter, simply referred to as a "correcting apparatus" 100) includes a receiver 110, an estimator 120, a calculator 130, and a controller 140.

The receiver 110 may receive, from a ground-based orbit propagator, a desired satellite position $P_{Desired}$ of a satellite and a planned ground imaging time $T_{Imaging}$ in response to an image acquisition command. That is, the receiver 110 may perform a function of receiving, from an operator, a position of the satellite that is initially targeted to obtain a satellite image, and an imaging initiation time at which capturing an image, or imaging, is initiated.

The desired satellite position $P_{Desired}$ for imaging may refer to a position of the satellite in orbit for capturing an image of a target on the ground, and be a position in a vertical space of the satellite that passes a region which is an image capturing target.

The planned ground imaging time $T_{Imaging}$ may refer to a time for capturing an image of a target on the ground that is planned by the ground-based orbit propagator, and be an initially targeted imaging initiation time.

The ground-based orbit propagator may be satellite orbit prediction software that is implemented in a ground station.

Theoretically, a time at which the satellite arrives at the desired satellite position $P_{Desired}$ for imaging may need to be the planned ground imaging time $T_{Imaging}$. However, due to a satellite orbit prediction error, the planned ground imaging time $T_{Imaging}$ may come before the satellite arrives at the desired satellite position $P_{Desired}$, or after the satellite arrives at the desired satellite position $P_{Desired}$.

Thus, the correcting apparatus 100 may correct a posture of the satellite to allow the satellite to accurately capture an image of a target on the ground at the planned ground imaging time $T_{Imaging}$ based on such an error.

The estimator 120 may estimate a predicted satellite position $P_{Predicted}$ at which the satellite is to be positioned at the planned ground imaging time $T_{Imaging}$. The predicted satellite position $P_{Predicted}$ may refer to a position of the satellite in orbit at the planned ground imaging time $T_{Imaging}$ that is predicted by a satellite-based orbit propagator. That is, the estimator 120 may perform a function of estimating a point at which the satellite is predicted to be positioned at the initially set planned ground imaging time $T_{Imaging}$. The satellite-based orbit propagator may be satellite orbit prediction software that is provided in the satellite.

The calculator 130 may calculate a posture correction angle $d\theta$ for the satellite at the predicted satellite position $P_{Predicted}$, using the desired satellite position $P_{Desired}$ for imaging. The posture correction angle $d\theta$ may refer to an angle by which a posture of the satellite needs to be corrected when capturing an image. That is, the calculator 130 may correct an image capturing posture of the satellite that is actually disposed at the predicted satellite position $P_{Predicted}$ such that the satellite captures a satellite image while accurately viewing a target on the ground.

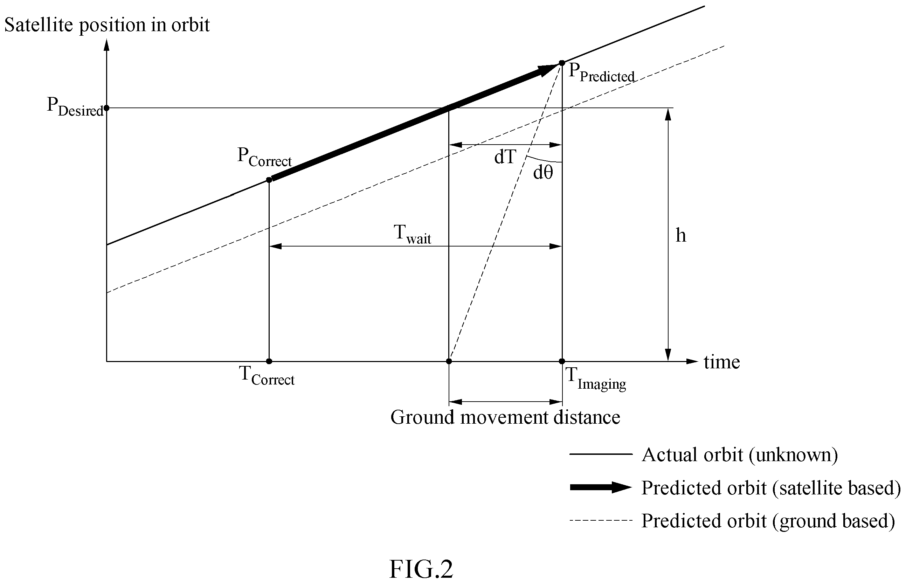

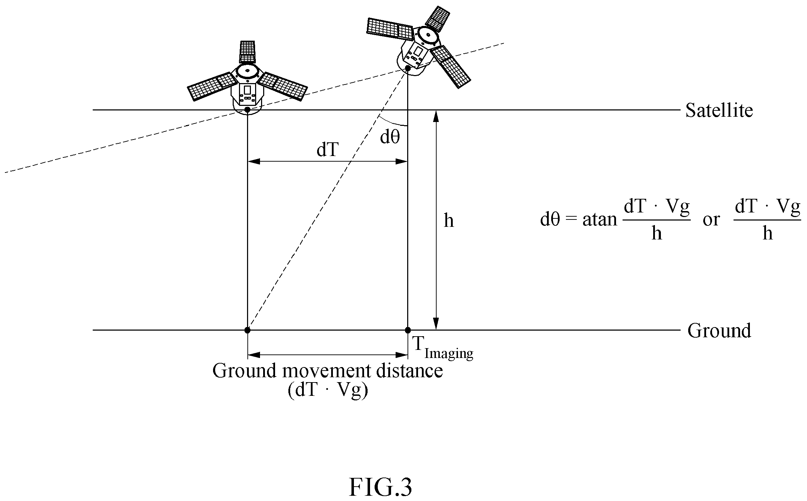

The desired satellite position $P_{Desired}$, the planned ground imaging time $T_{Imaging}$, the predicted satellite position $P_{Predicted}$, and the posture correction angle $d\theta$ that are calculated from the estimator 120 or the calculator 130 will be described in detail with reference to FIGS. 2 and 3.

FIG. 2 is a diagram illustrating an example of a visual representation of a calculated parameter according to an example embodiment.

In FIG. 2, a solid line indicates an actual orbit of a satellite, an arrow that moves along the solid line indicates a predicted orbit of the satellite that is predicted based on the satellite, and a broken line indicates a predicted orbit of the satellite that is predicted based on a ground station.

A desired satellite position $P_{Desired}$ for imaging is an initially targeted point of the satellite, and may have a targeted height and be parallel with an x-axis which is a line indicating time.

In FIG. 2, an orbit in which the satellite passes, for example, the satellite-based predicted orbit (solid line) and the ground-based predicted orbit (broken line), is illustrated as being upward in a right-side direction as the height or altitude of the satellite increases over time.

The desired satellite position $P_{Desired}$ received by the receiver 110 may correspond to a value on a y-axis (or a position of the satellite in orbit) in FIG. 2.

In addition, a planned ground imaging time $T_{Imaging}$ received by the receiver 110 may correspond to a value on the x-axis (the time-indicating line) in FIG. 2, and be used to calculate a predicted satellite position $P_{Predicted}$.

In a state in which each parameter is as illustrated in FIG. 2, the satellite disposed at the predicted satellite position $P_{Predicted}$ may capture an image of a region on the ground at the planned ground imaging time $T_{Imaging}$ according to the design.

However, a target region which is an initially targeted region from which an image is to be captured may be a region from which an image is to be captured by the satellite at the desired satellite position $P_{Desired}$, and thus the correcting apparatus 100 may correct a posture of the satellite by a posture correction angle $d\theta$ such that the satellite views the target region vertically.

FIG. 3 is a diagram illustrating a detailed example of calculating a posture correction angle according to an example embodiment.

FIG. 3 illustrates an enlarged portion of a relationship between the desired satellite position $P_{Desired}$ for imaging and the predicted satellite position $P_{Predicted}$ that is illustrated in FIG. 2.

The calculator 130 may calculate a satellite height h of the satellite. The satellite height h may be defined as a distance from the surface of the ground to the satellite. To calculate the satellite height h, the satellite may transmit, to the correcting apparatus 100, height coordinates when the satellite arrives at the predicted satellite position $P_{Predicted}$, and the calculator 130 of the correcting apparatus 100 may then convert the height coordinates to the satellite height h.

In addition, the calculator 130 may calculate a ground (or terrestrial) movement distance of the satellite between the desired satellite position $P_{Desired}$ and the predicted satellite position $P_{Predicted}$.

To calculate the ground movement distance of the satellite, the calculator 130 may first calculate an imaging time error dT in a satellite orbit.

The imaging time error dT may refer to a time obtained by dividing, by a satellite velocity V, a distance difference between the desired satellite position $P_{Desired}$ and the predicted satellite position $P_{Predicted}$, and be a parameter that indicates a difference between an initially targeted imaging initiation time and an actual imaging initiation time.

The satellite velocity V may refer to a velocity of the satellite in orbit, and be obtained through a receiver of a global navigation satellite system (GNSS) provided in the satellite. The receiver of the GNSS may be a hardware device provided in the satellite, and configured to provide position and velocity information of the satellite. The GNSS may be any one of a global positioning system (GPS), a GLONASS, and a GALILEO system.

Subsequently, the calculator 130 may calculate the ground movement distance by multiplying the imaging time error dT by a ground (or terrestrial) satellite velocity Vg. The ground satellite velocity Vg may refer to a velocity of the satellite that is projected to the surface of the ground, and be a velocity at which an orthogonal projection of the satellite passes from a target region to a region on the ground that is vertical to the predicted satellite position $P_{Predicted}$.

That is, the calculator 130 may calculate 'dT*Vg' to be the ground movement distance.

In addition, the calculator 130 may calculate the posture correction angle $d\theta$ by applying the satellite height h and the ground movement distance to a trigonometrical function or a linear approximation function. For example, the calculator 130 may calculate the posture correction angle $d\theta$ using the trigonometrical function $\mathrm{atan}((dT*Vg)/h)$ or the linear approximation function $(dT*Vg)/h$.

In addition, the correcting apparatus 100 may estimate the predicted satellite position $P_{Predicted}$ based on an imaging wait time $T_{wait}$ of the satellite.

To this end, the receiver 110 may receive, from a ground-based orbit propagator, a correction angle calculating time $T_{Correct}$ at which an image acquisition command is generated. The correction angle calculating time $T_{Correct}$ may be defined as a correction command execution time for calculating the posture correction angle $d\theta$, and be set to be a time that is ahead of the planned ground imaging time $T_{Imaging}$ for performing correction before obtaining an image.

In response to the correction angle calculating time $T_{Correct}$ being received, the receiver 110 may obtain, from the receiver of the GNSS, a satellite position $P_{Correct}$ which is a position of the satellite at the correction angle calculating time $T_{Correct}$ at which the image acquisition command is generated. The satellite position $P_{Correct}$ may refer to a position of the satellite in orbit at the correction angle calculating time $T_{Correct}$, and be obtained from the receiver of the GNSS provided in the satellite. The receiver 110 may also obtain a satellite velocity $V$ through the receiver of the GNSS.

The calculator 130 may calculate the imaging wait time $T_{wait}$ of the satellite by subtracting the correction angle calculating time $T_{Correc}$ from the planned ground imaging time $T_{Imaging}$. The imaging wait time $T_{wait}$ may refer to a remaining time after the correction angle calculating time $T_{Correct}$ until the planned ground imaging time $T_{Imaging}$.

That is, the calculator 130 may calculate, as the imaging wait time $T_{wait}$, a time after a time at which the correction command execution time is generated until the planned ground imaging time $T_{Imaging}$ at which imaging (or capturing an image) is actually performed.

Subsequently, the estimator 120 may estimate, to be the predicted satellite position $P_{Predicted}$, a position of the satellite after the imaging wait time $T_{wait}$, through a satellite-based orbit propagator. For example, the estimator 120 may estimate, to be the predicted satellite position $P_{Predicted}$, a position of the satellite when the imaging wait time $T_{wait}$ is terminated based on a satellite velocity $V$ of the satellite that moves along an orbit of the satellite.

Referring back to FIG. 1, after the posture of the satellite is corrected based on the posture correction angle $d\theta$, the controller 140 may perform control such that an image is obtained from the satellite. That is, the controller 140 may incline the posture of the satellite at the predicted satellite position $P_{Predicted}$ by the posture correction angle $d\theta$ to allow a target region which is an image capturing target to be disposed on a straight line with an image capturing means in the satellite.

According to an example embodiment, a method and apparatus for correcting a satellite image acquiring posture may obtain a satellite image of a desired target region without an error by correcting a posture of a satellite and thereby compensating for a difference between an actual position of the satellite at a planned ground imaging time $T_{Imaging}$ that is initially targeted to obtain an image and a desired satellite position $P_{Desired}$ of the satellite that is initially targeted for capturing an image.

In addition, the method and apparatus may simply calculate a posture of the satellite that needs to be corrected through a mathematical calculation that uses a difference between a position in a satellite-based predicted orbit and a position in a ground-based predicted orbit.

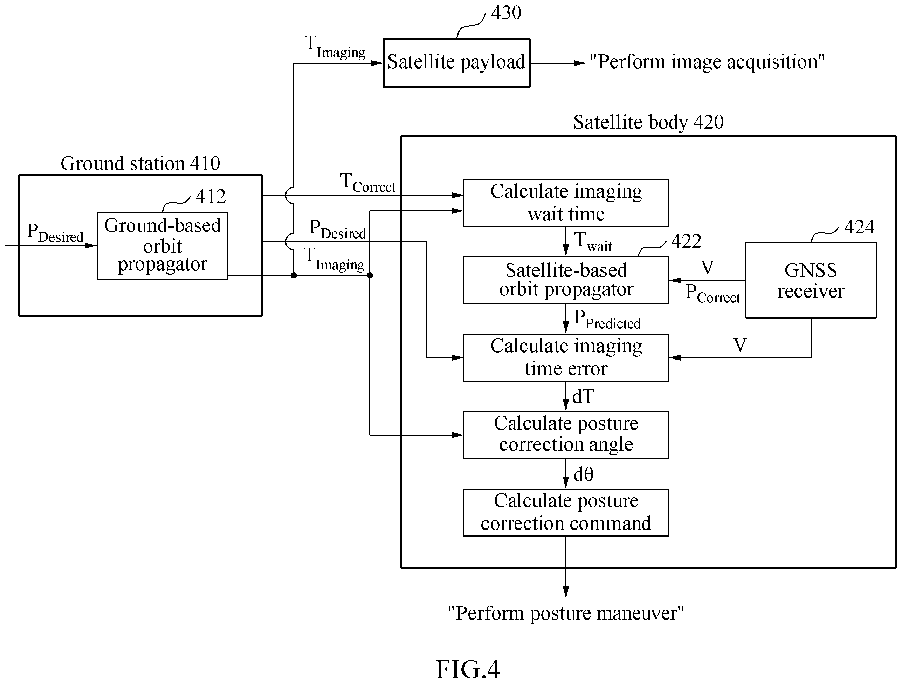

FIG. 4 is a diagram illustrating an example of obtaining a satellite image according to an example embodiment.

Referring to FIG. 4, a ground station 410 includes a ground-based orbit propagator 412, and a satellite body 420 includes a satellite-based orbit propagator 422 and a receiver 424 of a GNSS. A satellite payload 430 may be provided independently of the satellite body 420 or included in the satellite body 420.

The ground station 410 may receive a desired satellite position $P_{Desired}$ for imaging or capturing an image.

The ground station 410 may calculate a planned ground imaging time $T_{Imaging}$ corresponding to the desired satellite position $P_{Desired}$ using the ground-based orbit propagator 412.

The ground station 410 may transmit the planned ground imaging time $T_{Imaging}$ to the satellite body 420.

The ground station 410 may transmit a correction angle calculating time $T_{Correct}$ and the desired satellite position $P_{Desired}$ to the satellite body 420.

The satellite body 420 may calculate an imaging wait time $T_{wait}$ using the correction angle calculating time $T_{Correct}$ and the planned ground imaging time $T_{Imaging}$.

$$\ulcorner T_{wait} = T_{Imaging} - T_{Correct} \lrcorner$$

The satellite body 420 may obtain a satellite position $P_{Correct}$ at the correction angle calculating time $T_{Correct}$ through the receiver 424 of the GNSS. The satellite body 420 may also obtain a satellite velocity $V$ through the receiver 424 of the GNSS.

The satellite body 420 may calculate a predicted satellite position $P_{Predicted}$ after the imaging wait time $T_{wait}$, at the correction angle calculating time $T_{Correct}$ using the satellite-based orbit propagator 422.

The satellite-based orbit propagator 422 may receive the satellite position $P_{Correct}$, the satellite velocity $V$, and the imaging wait time $T_{wait}$, and then output the predicted satellite position $P_{Predicted}$.

The satellite body 420 may calculate an imaging time error $dT$ using the desired satellite position $P_{Desired}$, the predicted satellite position $P_{Predicted}$, and the satellite velocity $V$.

$$\ulcorner dT = (P_{Desired} - P_{Predicted}) / V \lrcorner$$

The satellite body 420 may calculate a posture correction angle $d\theta$ using the imaging time error dT.

$$\ulcorner d\theta = atan((dT*Vg)/h) \lrcorner$$

The satellite body 420 may generate a posture correction command using the posture correction angle $d\theta$ and perform a posture maneuver of the satellite body 420.

In addition, the satellite payload 430 may perform image acquisition at the planned ground imaging time $T_{Imaging}$.

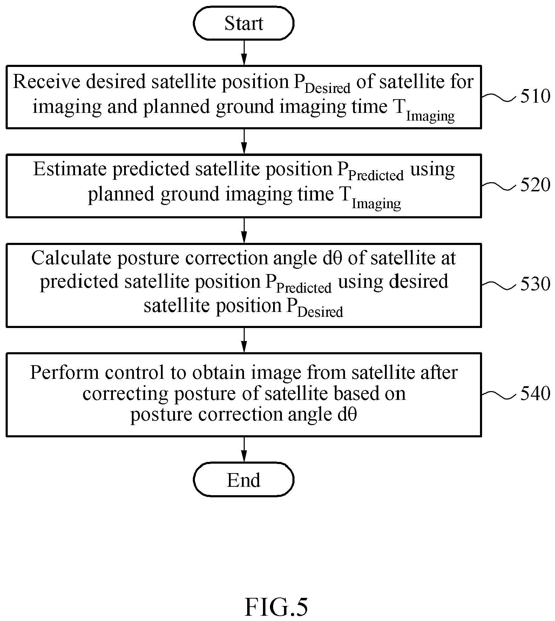

Hereinafter, a flow of operations to be performed by the correcting apparatus 100 will be described in detail with reference to FIG. 5.

FIG. 5 is a flowchart illustrating an example of a method of correcting a satellite image acquiring posture according to an example embodiment.

The method of correcting a satellite image acquiring posture to be described hereinafter may be performed by the correcting apparatus 100 described above.

In operation 510, the correcting apparatus 100 receives, from a ground-based orbit propagator, a desired satellite position $P_{Desired}$ of a satellite for imaging and a planned ground imaging time $T_{Imaging}$ in response to an image acquisition command. Operation 510 may be to receive, from an operator, an initially targeted satellite position for obtaining a satellite image, and an imaging initiation time.

The desired satellite position $P_{Desired}$ for imaging may refer to a position of the satellite in orbit for capturing an image of a target on the ground, and be a position in a vertical space of the satellite that passes a region which is an image capturing target.

The planned ground imaging time $T_{Imaging}$ may refer to a time that is planned by a ground-based orbit propagator for capturing an image of a target on the ground, and be an initially targeted imaging initiation time.

The ground-based orbit propagator may be satellite orbit prediction software that is implemented in a ground station.

Theoretically, a time at which the satellite arrives at the desired satellite position $P_{Desired}$ may need to be the planned ground imaging time $T_{Imaging}$. However, due to a satellite orbit prediction error, the planned ground imaging time $T_{Imaging}$ may come before the satellite arrives at the desired satellite position $P_{Desired}$, or after the satellite arrives at the desired satellite position $P_{Desired}$.

Thus, the correcting apparatus 100 may correct a posture of the satellite to allow the satellite to accurately capture an image of a target on the ground at the planned ground imaging time $T_{Imaging}$ that already passed the target on the ground, based on such an error.

In operation 520, the correcting apparatus 100 estimates a predicted satellite position $P_{Predicted}$ at which the satellite is to be disposed at the planned ground imaging time $T_{Imaging}$. The predicted satellite position $P_{Predicted}$ may refer to a position of the satellite in orbit at the planned ground imaging time $T_{Imaging}$ that is predicted by a satellite-based orbit propagator. Operation 520 may be to estimate a point at which the satellite is predicted to be disposed at the initially set planned ground imaging time $T_{Imaging}$. The satellite-based orbit propagator may be satellite orbit prediction software provided in the satellite.

In operation 530, the correcting apparatus 100 calculates a posture correction angle $d\theta$ for the satellite at the predicted satellite position $P_{Predicted}$ using the desired satellite position $P_{Desired}$ for imaging. The posture correction angle $d\theta$ may refer to an angle by which the posture of the satellite needs to be corrected when capturing an image. Operation 530 may be to correct an image capturing posture of the satellite actually disposed at the predicted satellite position $P_{Predicted}$ such that the satellite captures a satellite image while accurately viewing a target on the ground.

When calculating the posture correction angle $d\theta$, the desired satellite position $P_{Desired}$ may be a value on the y-axis (or a position of the satellite in orbit) in FIG. 2.

In addition, the planned ground imaging time $T_{Imaging}$ may be a value on the x-axis (the time line) in FIG. 2, and be used to calculate the predicted satellite position $P_{Predicted}$.

The satellite at the predicted satellite position $P_{Predicted}$ may capture an image of a region on the ground corresponding to the planned ground imaging time $T_{Imaging}$.

However, a target region which is an initially targeted image capturing region may be a region from which the satellite captures an image at the desired satellite position $P_{Desired}$ for imaging. Thus, the correcting apparatus 100 may correct the posture of the satellite based on the posture correction angle $d\theta$ to allow the satellite to vertically view the target region.

To correct the posture, the correcting apparatus 100 may calculate a satellite height h of the satellite. The satellite height h may be defined as a distance from the surface of the ground to the satellite. When calculating the satellite height h, the satellite may transmit height coordinates when it arrives at the predicted satellite position $P_{Predicted}$ to the correcting apparatus 100, and the correcting apparatus 100 may then convert the height coordinates to the satellite height h.

In addition, the correcting apparatus 100 may calculate a ground movement distance of the satellite between the desired satellite position $P_{Desired}$ and the predicted satellite position $P_{Predicted}$.

To calculate the ground movement distance of the satellite, the correcting apparatus 100 may calculate an imaging time error dT in a satellite orbit.

The imaging time error dT may refer to a time obtained by dividing, by a satellite velocity V, a distance difference between the desired satellite position $P_{Desired}$ and the predicted satellite position $P_{Predicted}$, and be a parameter that indicates a difference between an initially targeted imaging initiation time and an actual imaging initiation time.

The satellite velocity V may refer to a velocity of the satellite in orbit, and be obtained through a receiver of a GNSS provided in the satellite. The receiver of the GNSS may be a hardware device provided in the satellite and configured to provide position and velocity information of the satellite. The GNSS may be any one of a GPS, a GLONASS, and a GALILEO system.

Subsequently, the correcting apparatus 100 may calculate the ground movement distance by multiplying the imaging time error dT by a ground satellite velocity Vg. The ground satellite velocity Vg may refer to a velocity of the satellite that is projected to the surface of the ground, and be a velocity at which an orthogonal projection of the satellite passes from a target region to a region on the ground that is vertical to the predicted satellite position $P_{Predicted}$.

That is, the correcting apparatus 100 may calculate 'dT*Vg' to be the ground movement distance.

In addition, the correcting apparatus 100 may calculate the posture correction angle dθ by applying the satellite height h and the ground movement distance to a trigonometrical function or a linear approximation function. For example, the correcting apparatus 100 may calculate the posture correction angle dθ using the trigonometrical function atan((dT*Vg)/h) or the linear approximation function (dT*Vg)/h.

In addition, the correcting apparatus 100 may receive, from the ground-based obit propagator, a correction angle calculating time $T_{Correct}$ at which the image acquisition command is generated. The correction angle calculating time $T_{Correct}$ may be defined as a correction command execution time for calculating the posture correction angle dθ, and be set to be a time that is ahead of the planned ground imaging time $T_{Imaging}$ for performing correction before obtaining an image.

The correcting apparatus 100 may also receive, from the receiver of the GNSS, a satellite position $P_{Correct}$ at the correction angle calculating time $T_{Correct}$ at which the image acquisition command is generated, in response to the correction angle calculating time $T_{Correct}$ being received. The satellite position $P_{Correct}$ may refer to a position of the satellite in orbit at the correction angle calculating time $T_{Correct}$, and be obtained from the receiver of the GNSS provided in the satellite.

The correcting apparatus 100 may calculate an imaging wait time $T_{wait}$ of the satellite by subtracting the correcting angle calculating time $T_{Correct}$ from the planned ground imaging time $T_{Imaging}$. The imaging wait time $T_{wait}$ may refer to a remaining time after the correction angle calculating time $T_{Correct}$ until the planned ground imaging time $T_{Imaging}$.

That is, the correcting apparatus 100 may calculate, as the imaging wait time $T_{wait}$, a time after the correction command execution time is generated until the planned ground imaging time $T_{Imaging}$ at which imaging or image capturing is actually performed.

Subsequently, the correcting apparatus 100 may estimate, to be the predicted satellite position $P_{Predicted}$, a position of the satellite after the imaging wait time $T_{wait}$ through the satellite-based orbit propagator. For example, the correcting apparatus 100 may estimate, to be the predicted satellite position $P_{Predicted}$, a position of the satellite when the imaging wait time $T_{wait}$ is terminated based on a satellite velocity V of the satellite that moves along a satellite orbit.

In operation 540, the correcting apparatus 100 performs control such that an image is obtained from the satellite after correcting the posture of the satellite based on the posture correction angle dθ. Operation 540 may be to control the posture of the satellite by inclining the posture of the satellite at the predicted satellite position $P_{Predicted}$ by the posture correction angle dθ such that a target region which is an image capturing target and an image capturing means in the satellite are on a straight line.

According to an example embodiment, a method and apparatus for correcting a satellite image acquiring posture may compensate for a difference between an actual position of a satellite at a planned ground imaging time $T_{Imaging}$ that is initially set to obtain an image and a desired satellite position $P_{Desired}$ that is initially targeted for capturing an image, by correcting a posture of the satellite. Thus, it is possible to obtain a satellite image of a desired target region without an error.

In addition, the method and apparatus may simply calculate a posture of the satellite that needs to be corrected through a mathematical calculation that uses a difference between a position in a satellite-based predicted orbit and a position in a ground-based predicted orbit.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums. The non-transitory computer readable recording medium may include any data storage device that can store data which can be thereafter read by a computer system or processing device.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims.

**Claims**

1. A method of correcting a satellite image acquiring posture, the method comprising:

   Receiving (510), from a ground-based orbit propagator (412), a desired satellite position $P_{Desired}$ of a satellite for imaging and a planned ground imaging time $T_{Imaging}$, in response to an image acquisition command;
   Estimating (520) a predicted satellite position $P_{Predicted}$ at which the satellite is to be disposed at the planned ground imaging time $T_{Imaging}$; **characterised in that** the method comprises:

   Calculating (530) a posture correction angle $d\theta$ for the satellite at the predicted satellite position $P_{Predicted}$ using the desired satellite position $P_{Desired}$; and
   Performing (540) control to obtain an image from the satellite, after a posture of the satellite is corrected based on the posture correction angle $d\theta$.

2. The method of claim 1, wherein the calculating of the posture correction angle $d\theta$ comprises:

   calculating a ground movement distance of the satellite between the desired satellite position $P_{Desired}$ and the predicted satellite position $P_{Prdeicted}$; and
   calculating the posture correction angle $d\theta$ by applying a satellite height h and the ground movement distance to a trigonometrical function or a linear approximation function.

3. The method of claim 2, further comprising:
   calculating an imaging time error dT by dividing, by a satellite velocity V, a distance difference between the desired satellite position $P_{Desired}$ and the predicted satellite position $P_{Predicted}$,
   wherein the calculating of the ground movement distance of the satellite comprises:
   calculating the ground movement distance by multiplying the imaging time error dT by a ground satellite velocity Vg.

4. The method of claim 1, further comprising:

   receiving, from the ground-based orbit propagator, a correction angle calculating time $T_{Correct}$ at which the image acquisition command is generated; and
   calculating an imaging wait time $T_{wait}$ of the satellite by subtracting the correction angle calculating time $T_{Correct}$ from the planned ground imaging time $T_{Imaging}$,
   wherein the estimating of the predicted satellite position $P_{Predicted}$ comprises:
   estimating, to be the predicted satellite position $P_{Predicted}$, a position of the satellite after the imaging wait time $T_{wait}$ through a satellite-based orbit propagator.

5. The method of claim 4, further comprising:
   obtaining, from a global navigation satellite system (GNSS) receiver (424), a satellite position $P_{Correct}$ and a satellite velocity V at the correction angle calculating time $T_{Correct}$ at which the image acquisition command is generated.

6. An apparatus for correcting a satellite image acquiring posture, the apparatus comprising:

a receiver (110) configured to receive (510), from a ground-based orbit propagator (412), a desired satellite position $P_{Desired}$ of a satellite for imaging and a planned ground imaging time $T_{Imaging}$, in response to an image acquisition command;

an estimator (120) configured to estimate (520) a predicted satellite position $P_{Predicted}$ at which the satellite is to be disposed at the planned ground imaging time $T_{Imaging}$; **characterised in that** apparatus comprises:

> a calculator (130) configured to calculate (530) a posture correction angle $d\theta$ for the satellite at the predicted satellite position $P_{Predicted}$ using the desired satellite position $P_{Desired}$; and
> a controller (140) configured to perform control (540) to obtain an image from the satellite, after a posture of the satellite is corrected based on the posture correction angle $d\theta$.

**7.** The apparatus of claim 6, wherein the calculator (130) is configured to:

> calculate a ground movement distance of the satellite between the desired satellite position $P_{Desired}$ and the predicted satellite position $P_{Predicted}$; and
> calculate (530) the posture correction angle $d\theta$ by applying a satellite height h of the satellite and the ground movement distance to a trigonometrical function or a linear approximation function.

**8.** The apparatus of claim 7, wherein the calculator (130) is configured to:

> calculate an imaging time error dT by diving, by a satellite velocity V, a distance difference between the desired satellite position $P_{Desired}$ and the predicted satellite position $P_{Predicted}$; and
> calculate the ground movement distance by multiplying the imaging time error dT by a ground satellite velocity Vg.

**9.** The apparatus of claim 6, wherein the receiver (110) is configured to:
receive, from the ground-based orbit propagator, a correction angle calculating time $T_{Correct}$ at which the image acquisition command is generated, wherein the calculator is configured to:

> calculate an imaging wait time $T_{wait}$ by subtracting the correction angle calculating time $T_{Correct}$ from the planned ground imaging time $T_{Imaging}$, and

the estimator is configured to:
estimate, to be the predicted satellite position $P_{Predicted}$, a position of the satellite after the imaging wait time $T_{wait}$ through a satellite-based orbit propagator.

**10.** The apparatus of claim 9, wherein the receiver is configured to:

> obtain, from a global navigation satellite system (GNSS) receiver, a satellite position $P_{Correct}$ and a satellite velocity V at the correction angle calculating time $T_{Correct}$ at which the image acquisition command is generated.
> the satellite.

**Patentansprüche**

**1.** Verfahren zur Korrektur der Stellung beim Erfassen eines Satellitenbildes, wobei das Verfahren Folgendes umfasst:

> Empfangen (510), von einem bodengestützten Orbitpropagator (412), einer gewünschten Satellitenposition $P_{Soll}$ eines Satelliten für die Bildgebung und einer geplanten Bodenbildgebungszeit $T_{Bildgebung}$, in Reaktion auf einen Bilderfassungsbefehl;
> Schätzen (520) einer vorausberechneten Satellitenposition $P_{Vorausberechnet}$, an der sich der Satellit zur geplanten Bodenbildgebungszeit $T_{Bildgebung}$ befinden soll; **dadurch gekennzeichnet, dass** das Verfahren Folgendes umfasst:

> > Berechnen (530) eines Stellungskorrekturwinkels $d\theta$ für den Satelliten an der vorausberechneten Satellitenposition $P_{Vorausberechnet}$ unter Verwendung der Soll-Satellitenposition $P_{Soll}$; und
> > Durchführen (540) der Steuerung, um ein Bild vom Satelliten zu erhalten, nachdem eine Stellung des Satelliten auf der Grundlage des Stellungskorrekturwinkels $d\theta$ korrigiert wurde.

**2.** Verfahren nach Anspruch 1, wobei das Berechnen des Stellungskorrekturwinkels $d\theta$ Folgendes umfasst:

> Berechnen einer Bodenbewegungsabstands des Satelliten zwischen der Soll-Satellitenposition $P_{Soll}$ und der vorausberechneten Satellitenposition $P_{Vorausberechnet}$; und
> Berechnen des Stellungskorrekturwinkels $d\theta$ durch Anwendung einer Satellitenhöhe h und des Bodenbewegungsabstands auf eine trigonometrische Funktion oder eine lineare Näherungsfunktion.

3. Verfahren nach Anspruch 2, ferner umfassend:
Berechnen eines Bildgebungszeitfehlers dT durch Division einer Abstandsdifferenz zwischen der Soll-Satellitenposition $P_{Soll}$ und der vorausberechneten Satellitenposition $P_{Vorausberechnet}$ durch eine Satellitengeschwindigkeit V,
wobei das Berechnen des Bodenbewegungsabstands des Satelliten Folgendes umfasst:
Berechnen des Bodenbewegungsabstands durch Multiplikation des Bildgebungszeitfehlers dT mit einer Bodensatellitengeschwindigkeit Vg.

4. Verfahren nach Anspruch 1, ferner umfassend:

Empfangen, von dem bodengestützten Orbitpropagator, einer Korrekturwinkel-Berechnungszeit $T_{Korrektur}$, zu der der Bilderfassungsbefehl erzeugt wird; und
Berechnen einer Bildgebungswartezeit $T_{Warten}$ des Satelliten durch Subtraktion der Korrekturwinkel-Berechnungszeit $T_{Korrektur}$ von der geplanten Bodenbildgebungszeit $T_{Bildgebung}$.
wobei das Schätzen der vorausberechneten Satellitenposition $P_{Vorausberechnet}$ Folgendes umfasst:
Schätzen einer Position des Satelliten nach der Bildgebungswartezeit $T_{Warten}$ durch einen satellitengestützten Orbitpropagator, die die vorausberechnete Satellitenposition $P_{Vorausberechnet}$ sein soll.

5. Verfahren nach Anspruch 4, ferner umfassend:
Erhalten, von einem Empfänger (424) eines globalen Navigationssatellitensystems (GNSS), einer Satellitenposition $P_{Korrektur}$ und einer Satellitengeschwindigkeit V zur Korrekturwinkel-Berechnungszeit $T_{Korrektur}$, zu der der Bilderfassungsbefehl erzeugt wird.

6. Vorrichtung zur Korrektur der Stellung beim Erfassen eines Satellitenbildes, wobei die Vorrichtung Folgendes umfasst:

einen Empfänger (110), der so konfiguriert ist, dass er von einem bodengestützten Orbitpropagator (412) eine Soll-Satellitenposition $P_{Soll}$ eines Satelliten für die Bildgebung und eine geplante Bodenbildgebungszeit $T_{Bildgebung}$ als Reaktion auf einen Bilderfassungsbefehl empfängt (510);
einen Schätzer (120), der so konfiguriert ist, dass er eine vorausberechnete Satellitenposition $P_{Vorausberechnet}$, an der sich der Satellit zur geplanten Bodenbildgebungszeit $T_{Bildgebung}$ befinden soll, schätzt (520); **dadurch gekennzeichnet, dass** die Vorrichtung Folgendes umfasst:

einen Rechner (130), der so konfiguriert ist, dass er einen Stellungskorrekturwinkel dθ für den Satelliten an der vorausberechneten Satellitenposition $P_{Vorausberechnet}$ unter Verwendung der Soll-Satellitenposition $P_{Soll}$ berechnet (530); und
eine Steuerung (140), die so konfiguriert ist, dass sie eine Steuerung (540) durchführt, um ein Bild von dem Satelliten zu erhalten, nachdem eine Stellung des Satelliten auf der Grundlage des Stellungskorrekturwinkels dθ korrigiert wurde.

7. Vorrichtung nach Anspruch 6, wobei der Rechner (130) so konfiguriert ist, dass:

ein Bodenbewegungsabstand des Satelliten zwischen der Soll-Satellitenposition $P_{Soll}$ und der vorausberechneten Satellitenposition $P_{Vorausberechnet}$ berechnet wird; und
der Stellungskorrekturwinkel dθ durch Anwendung einer Satellitenhöhe h Satelliten und des Bodenbewegungsabstands auf eine trigonometrische Funktion oder eine lineare Näherungsfunktion berechnet wird (530).

8. Vorrichtung nach Anspruch 7, wobei der Rechner (130) so konfiguriert ist, dass:

ein Bildgebungszeitfehler dT durch Division einer Abstandsdifferenz zwischen der Soll-Satellitenposition $P_{Soll}$ und der vorausberechneten Satellitenposition $P_{Vorausberechnet}$ durch eine Satellitengeschwindigkeit V berechnet wird; und
der Bodenbewegungsabstand durch Multiplikation des Bildgebungszeitfehlers dT mit einer Bodensatellitengeschwindigkeit Vg berechnet wird.

9. Vorrichtung nach Anspruch 6, wobei der Empfänger (110) so konfiguriert ist, dass er vom bodengestützten Orbit-Propagator eine Korrekturwinkel-Berechnungszeit $T_{Korrektur}$ empfängt, zu der der Bilderfassungsbefehl erzeugt wird,
wobei der Kalkulator so konfiguriert ist, dass er:

eine Bildgebungswartezeit $T_{Warten}$ durch Subtraktion der Korrekturwinkel-Berechnungszeit $T_{Korrektur}$ von der geplanten Bodenbildgebungszeit $T_{Bildgebung}$, und
der Schätzer so konfiguriert ist, dass er:
eine Position des Satelliten nach der Bildgebungswartezeit $T_{Warten}$ durch einen satellitengestützten Orbitpropagator schätzt, die die vorausberechnete Satellitenposition $P_{Vorausberechnet}$ sein soll.

**10.** Vorrichtung nach Anspruch 9, wobei der Empfänger so konfiguriert ist, dass er:

von einem Empfänger eines globalen Navigationssatellitensystems (GNSS), eine Satellitenposition $P_{Korrektur}$ und eine Satellitengeschwindigkeit V zur Korrekturwinkel-Berechnungszeit $T_{Korrektur}$ erhält, zu der der Bilderfassungsbefehl erzeugt wird.
den Satelliten.

**Revendications**

**1.** Procédé de correction d'une position d'acquisition d'image satellite, le procédé comprenant :

la réception (510), à partir d'un propagateur d'orbite au sol (412), d'une position de satellite souhaitée $P_{Souhaitée}$ d'un satellite pour l'imagerie et d'un temps d'imagerie au sol prévu $T_{Imagerie}$, en réponse à une commande d'acquisition d'image ;
l'estimation (520) d'une position de satellite prédite $P_{Prédite}$ à laquelle le satellite doit être placé au temps d'imagerie au sol prévu $T_{Imagerie}$ ; **caractérisé en ce que** le procédé comprend :

le calcul (530) d'un angle de correction de position d$\theta$ pour le satellite à la position de satellite prédite $P_{Prédite}$ en utilisant la position de satellite souhaitée $P_{Souhaitée}$ ; et l'exécution (540) de la commande pour obtenir une image à partir du satellite, après correction d'une position du satellite sur la base de l'angle de correction de position d$\theta$.

**2.** Procédé selon la revendication 1, dans lequel le calcul de l'angle de correction de position d$\theta$ comprend :

le calcul d'une distance de déplacement au sol du satellite entre la position de satellite souhaitée $P_{Souhaitée}$ et la position de satellite prédite $P_{Prédite}$ ; et
le calcul de l'angle de correction de position d$\theta$ en appliquant une hauteur de satellite h et la distance de déplacement au sol à une fonction trigonométrique ou à une fonction d'approximation linéaire.

**3.** Procédé selon la revendication 2, comprenant en outre :
le calcul d'une erreur de temps d'imagerie dT en divisant, par une vitesse de satellite V, une différence de distance entre la position de satellite souhaitée

$P_{Souhaitée}$ et la position de satellite prédite $P_{Prédite}$, dans lequel le calcul de la distance de déplacement au sol du satellite comprend :
le calcul de la distance de déplacement au sol en multipliant l'erreur de temps d'imagerie dT par une vitesse de satellite au sol Vg.

**4.** Procédé selon la revendication 1, comprenant en outre :

la réception, à partir du propagateur d'orbite au sol, d'un temps de calcul d'angle de correction $T_{Correction}$ auquel la commande d'acquisition d'image est générée ; et
le calcul d'un temps d'attente d'imagerie $T_{Attente}$ du satellite en soustrayant le temps de calcul d'angle de correction $T_{Correction}$ du temps d'imagerie au sol prévu $T_{Imagerie}$,
dans lequel l'estimation de la position de satellite prédite $P_{Prédite}$ comprend :
l'estimation, en tant que la position de satellite prédite $P_{Prédite}$, d'une position du satellite après le temps d'attente d'imagerie $T_{Attente}$ par l'intermédiaire d'un propagateur d'orbite par satellite.

**5.** Procédé selon la revendication 4, comprenant en outre :
l'obtention, à partir d'un récepteur de système mondial de navigation par satellite (GNSS) (424), d'une position de satellite $P_{Correction}$ et d'une vitesse de satellite V au temps de calcul d'angle de correction $T_{Correction}$ auquel la commande d'acquisition d'image est générée.

**6.** Appareil de correction d'une position d'acquisition d'image satellite, l'appareil comprenant :

un récepteur (110) configuré pour recevoir (510), à partir d'un propagateur d'orbite au sol (412), une position de satellite souhaitée $P_{Souhaitée}$ d'un satellite pour l'imagerie et un temps d'imagerie au sol prévu $T_{Imagerie}$, en réponse à une commande d'acquisition d'image ;
un estimateur (120) configuré pour estimer (520) une position de satellite prédite $P_{Prédite}$ à laquelle le satellite doit être placé au temps d'imagerie au sol prévu $T_{Imagerie}$ ; **caractérisé en ce que** l'appareil comprend :
un calculateur (130) configuré pour calculer (530) un angle de correction de position d$\theta$ pour le satellite à la position de satellite prédite $P_{Prédite}$ en utilisant la position de satellite souhaitée $P_{Souhaitée}$ ; et
un dispositif de commande (140) configuré pour exécuter une commande (540) pour obtenir une image à partir du satellite, après correction d'une position du satellite sur la base de l'angle de correction de position dθ.

7. Appareil selon la revendication 6, dans lequel le calculateur (130) est configuré pour :

calculer une distance de déplacement au sol du satellite entre la position de satellite souhaitée $P_{Souhaitée}$ et la position de satellite prédite $P_{Prédite}$ ; et
calculer (530) l'angle de correction de position dθ en appliquant une hauteur de satellite h du satellite et la distance de déplacement au sol à une fonction trigonométrique ou à une fonction d'approximation linéaire.

8. Appareil selon la revendication 7, dans lequel le calculateur (130) est configuré pour :

calculer une erreur de temps d'imagerie dT en divisant, par une vitesse de satellite V, une différence de distance entre la position de satellite souhaitée $P_{Souhaitée}$ et la position de satellite prédite $P_{Prédite}$ ; et
calculer la distance de déplacement au sol en multipliant l'erreur de temps d'imagerie dT par une vitesse de satellite au sol Vg.

9. Appareil selon la revendication 6, dans lequel le récepteur (110) est configuré pour : recevoir, à partir du propagateur d'orbite au sol, un temps de calcul d'angle de correction $T_{Correction}$ auquel la commande d'acquisition d'image est générée,
dans lequel le calculateur est configuré pour :

calculer un temps d'attente d'imagerie $T_{Attente}$ en soustrayant le temps de calcul d'angle de correction $T_{Correction}$ du temps d'imagerie au sol prévu $T_{Imagerie}$, et
l'estimateur est configuré pour :
estimer, en tant que la position de satellite prédite $P_{Prédite}$, une position du satellite après le temps d'attente d'imagerie $T_{Attente}$ par l'intermédiaire d'un propagateur d'orbite par satellite.

10. Appareil selon la revendication 9, dans lequel le récepteur est configuré pour :

obtenir, à partir d'un récepteur de système mondial de navigation par satellite (GNSS), une position de satellite $P_{Correction}$ et une vitesse de satellite V au temps de calcul d'angle de correction $T_{Correction}$ auquel la commande d'acquisition d'image est générée.
le satellite.

Correcting apparatus 100

110                        120
┌─────────────────┐      ┌─────────────────┐
│                 │      │                 │
│     Receiver    │──────│    Estimator    │
│                 │      │                 │
└─────────────────┘      └─────────────────┘

130                        140
┌─────────────────┐      ┌─────────────────┐
│                 │      │                 │
│    Calculator   │──────│    Controller   │
│                 │      │                 │
└─────────────────┘      └─────────────────┘

FIG.1

FIG.2

$$d\theta = \mathrm{atan}\,\frac{dT \cdot Vg}{h}\ \ \text{or}\ \ \frac{dT \cdot Vg}{h}$$

Ground movement distance
(dT · Vg)

FIG.3

EP 3 878 758 B1

FIG.4

EP 3 878 758 B1

```
                        ┌─────────────┐
                        │    Start    │
                        └─────────────┘
                               │
                               ▼
┌──────────────────────────────────────────────────────────────┐
│ Receive desired satellite position P_Desired of satellite for │ ~ 510
│ imaging and planned ground imaging time T_Imaging             │
└──────────────────────────────────────────────────────────────┘
                               │
                               ▼
┌──────────────────────────────────────────────────────────────┐
│ Estimate predicted satellite position P_Predicted using       │ ~ 520
│ planned ground imaging time T_Imaging                         │
└──────────────────────────────────────────────────────────────┘
                               │
                               ▼
┌──────────────────────────────────────────────────────────────┐
│ Calculate posture correction angle dθ of satellite at         │
│ predicted satellite position P_Predicted using desired        │ ~ 530
│ satellite position P_Desired                                  │
└──────────────────────────────────────────────────────────────┘
                               │
                               ▼
┌──────────────────────────────────────────────────────────────┐
│ Perform control to obtain image from satellite after          │
│ correcting posture of satellite based on                      │ ~ 540
│ posture correction angle dθ                                   │
└──────────────────────────────────────────────────────────────┘
                               │
                               ▼
                        ┌─────────────┐
                        │     End     │
                        └─────────────┘
```

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001116584 A

- JP H0627235 A